# EUROPEAN PATENT APPLICATION

(11) **EP 4 765 727 A1**
(43) Date of publication of application: **24.06.2026**
(21) Application number: 24220788.4
(22) Date of filing: 17.12.2024
(51) Int. Cl.: H04L 9/32, H04L 12/40

(54) **COMMUNICATION METHOD, TRANSMITTER NODE, AUTHENTICATOR NODE, AND RECEIVER NODE**

(71) Applicant: Fraunhofer-Gesellschaft zur Förderung der angewandten Forschung e.V., 80686 München (DE); Universität Osnabrück, 49074 Osnabrück (DE)
(72) Inventor: Wagner, Eric, 52068 Aachen (DE); Basels, Frederik, 52068 Aachen (DE); Bauer, Jan, 52068 Aachen (DE); Zimmermann, Till, 49074 Osnabrück (DE)
(74) Representative: Pfenning, Meinig & Partner mbB

(57) **Abstract**

A communication method is disclosed which provides multicast source authentication. The method is carried out by a transmitter node, an authenticator node, and multiple receiver nodes. The method protects a payload transmitted in a multicast frame to multiple receivers. The transmitter computes a source authentication tag and an integrity-protecting tag based two Message Authentication Code (MAC) schemes. The method further computes an aggregated tag based on an aggregation of the source authentication tag and the integrity-protecting tag; and determines a multicast frame based on the payload and the aggregated tag. The authenticator node modifies the multicast frame during transmission by (1) recomputing the source authentication tag, and (2) aggregating the recomputed source authentication tag with the multicast frame. Receivers can only correctly verify the multicast frame if the transmitter node correctly computed the source authentication tag and the integrity-protecting tag and if the authenticator node correctly modified the frame.

## Description

### TECHNICAL FIELD

The present invention is generally related to the field of communication technology and to a communication method carried out by a transmitter node, a communication method carried out by an authenticator node, a communication method carried out by a receiver node, a communication method carried out by a communication system, a transmitter node, an authenticator node, and a receiver node.

### BACKGROUND

Fieldbuses are robust communication protocol widely employed in automotive, industrial, and automation environments to enable efficient data exchange among numerous electronic devices. Most fieldbuses were developed under the assumption that its operating environment was secure and isolated, leaving little consideration for security mechanisms to protect data integrity and authenticity. However, with the increasing interconnectivity of modern vehicles and automation systems, often accessible via wireless and networked interfaces, fieldbuses are now vulnerable to a range of cyberattacks that can compromise critical system functions. Furthermore, in fieldbuses, multiple devices may be directly connected to each other via a single transmission medium. In a fieldbus communications, i.e., the transmission of messages (frames) over a fieldbus, are sometimes addressed to multiple devices connected to the bus. Conventional fieldbuses rarely offer multicast source authentication due to security limitations. A conventional method to achieve source authentication on the Internet is based on using digital signatures. However, digital signatures are too long to fit into individual frames of most fieldbuses and consume significant bandwidth. Another conventional method for achieving source authentication is based on a Timed Efficient Stream Loss-Tolerant Authentication (TESLA) protocol and its variances, which relies on delayed key reveal. This method introduces inherent verification delays that make it not applicable for the often latency-critical applications controlled by fieldbuses.

Moreover, another conventional method is developed that can achieve multicast source authentication with multiplexed source-verifying information. However, in such a method each receiver only partially verifies a frame authenticity, which again costs additional bandwidth.

Currently, fieldbuses often lack robust security. Group-key-based authentication verifies data from an authorized device but cannot distinguish the actual sender from receivers sharing the group key. Alternatively, sender authentication via unique inter-frame spacing can disrupt message prioritization and is vulnerable to message overwrites during transmission. Some conventional methods authenticate only to a central authenticator, which can block unauthorized messages but is not resilient if the authenticator is disabled. Therefore, the conventional source authentication methods, such as digital signatures, are unsuitable for fieldbus systems due to their limited bandwidth and low tolerance for delay, which restricts high-overhead processing.

Generally, there is a need to provide a multicast source authentication mechanism that supports low bandwidth and real-time processing, e.g., as required by the CAN bus.

### SUMMARY

The invention is defined by the appended independent claims. Additional features and advantages of the concepts disclosed herein are set forth in the description which follows, and in part will be obvious from the description, or may be learned by practice of the described technologies. The features and advantages of the concepts may be realized and obtained by means of the devices and combinations particularly pointed out in the appended claims. These and other features of the described technologies will become more fully apparent from the following description and appended claims, or may be learned by the practice of the disclosed concepts as set forth herein.

The present invention addresses ensuring both source authenticity and data integrity in multicast communications within fieldbus systems, where each entity may independently verify these security properties. Specifically, each receiver node may authenticate the message source while ensuring no other receiver node can impersonate the transmitter node.

The present invention further presents a dedicated authenticator node that enables efficient verification of both the source authenticity and data integrity of messages in multicast communications. The communication methods and devices of the present invention may minimize bit usage, latency, and processing overhead, making it feasible for the constrained environment of fieldbus networks.

A first aspect of the disclosure provides a communication method carried out by a transmitter node, the communication method comprising obtaining a frame to be transmitted according to a multicast communication, wherein the frame comprises a payload; computing a source authentication tag based on a first secret key, the payload, and a first message authentication code (MAC) scheme, and an integrity-protecting tag based on a second secret key, the payload, and a second MAC scheme; computing an aggregated tag based on an aggregation of the source authentication tag and the integrity-protecting tag; and determining a multicast frame based on the frame and the aggregated tag.

The method of the first aspect may be carried out by the transmitter node. The transmitter node may be, for example, a node that may be configured to perform secure multicast communication over a bus-based network, such as the CAN bus commonly used in automotive and industrial control systems. The method of the first aspect may enable secure transmission of multicast messages over a communication bus, such as a Controller Area Network (CAN) bus. The method of the first aspect may provide advantages in scenarios where data integrity and source authentication are critical to preventing impersonation attacks and may ensure the reliability of multicast communication.

For example, the transmitter node may obtain a data frame intended for multicast communication. This frame may comprise a payload, which may contain the actual data to be transmitted to multiple receivers. The payload within the multicast frame may comprise data intended for distribution across multiple receiving nodes on the network. This payload may represent, for example, various types of control or monitoring information, depending on the application, such as sensor readings, commands, or status reports in automotive or automation environments. The integrity of the payload may be critical and may further require to be verified. In the method of the first aspect, the payload may be secured using both a source authentication tag and an integrity-protecting tag, generated based on the payload data and secret keys, ensuring that each multicast message transmitted maintains its intended content and source authenticity.

The method further comprises computing the source authentication tag. For example, the transmitter may compute a source authentication tag based on a first secret key, the payload, and a first MAC scheme. The source authentication tag may be derived from a unique key known only to the transmitter and an authenticator node, ensuring that the tag cannot be forged by unauthorized nodes. The source authentication tag may serve to validate the authenticity of the sender, as it is based on cryptographic data that identifies the source device.

The MAC scheme may be a cryptographic function that may be used for verifying the data integrity and the source authenticity by generating authentication tags based on secret keys and the data payload. In the following one or more MAC schemes may be used for verifying both the source and integrity of data across the transmitter node, the authenticator node, and the receiver node.

The method further comprises computing the integrity-protecting tag. For example, the transmitter node may compute the integrity-protecting tag using a second secret key, the payload, and a second MAC scheme. The integrity-protecting tag may be computed to confirm the integrity of the data payload, ensuring that the message has not been altered during the multicast transmission. The integrity-protecting tag may be derived from a secret key shared among the transmitter node and the intended receiver nodes, making it verifiable by any authorized recipient within the multicast group.

The method further comprises computing the aggregated tag. For example, the aggregated tag may be computed by aggregating the source authentication tag and the integrity-protecting tag using an aggregation function, such as an Exclusive OR (XOR) operation. The aggregated tag may ensure that both the source authentication tag and the integrity-protecting tag may be efficiently embedded within a single tag, minimizing the space needed for authentication and preventing additional overhead in the data frame.

The method further comprises determining the multicast frame based on the frame and the aggregated tag. For example, the transmitter node may construct a multicast frame that may comprise both the payload and the aggregated tag, in order to be transmitted over the communication bus.

The method of the first aspect may optimize secure multicast communication by enabling, e.g., a single, compact tag to comprise both the source authentication tag and the integrity-protecting tag. The method of the first aspect may be advantageous particularly in resource-constrained environments such as the CAN buses. For example, the method provides robust security without compromising bandwidth or introducing delays.

In summary, the method of the first aspect may provide a streamlined and highly secure approach to multicast communication over bus-based networks, achieving both source authentication and data integrity verification without compromising bandwidth or real-time performance. These advantages make the method particularly valuable for secure, efficient, and reliable communication in constrained network environments.

In an implementation form of the first aspect, the aggregation of the source authentication tag and the integrity-protecting tag is performed by an aggregation function.

Advantageously, this may enable the receiver nodes to verify that the payload has not been altered during transmission. For example, one or more receivers may independently validate the payload's integrity by using the shared secret key. This may further ensure reliable communication across all receiving nodes.

In a further implementation form of the first aspect, the aggregation function comprises an Exclusive or (XOR) operation, and wherein the aggregated tag is computed by aggregating the source authentication tag and the integrity-protecting tag with the XOR operation.

The method may use an aggregation function, such as XOR, to combine the source authentication tag and the integrity-protecting tag into a single aggregated tag. Advantageously, this may reduce the bandwidth required to maintain secure communication. This efficiency is essential in environments like CAN, where each frame has a limited payload size. By consolidating both tags, the method optimizes the available space without sacrificing security or requiring additional data fields.

In a further implementation form of the first aspect, the determining a multicast frame based on the frame and the aggregated tag comprises aggregating the aggregated tag and the payload of the frame.

In a further implementation form of the first aspect, the communication method further comprises performing a multicast communication comprising transmitting the multicast frame toward an authenticator node and a plurality of receivers, over a bus-based transmission medium.

In a further implementation form of the first aspect, before computing a source authentication tag based on a first secret key, the payload, and a first MAC scheme, and an integrity-protecting tag based on a second secret key, the payload, and a second MAC scheme, the method further comprises; obtaining the first secret key associated with source authentication information, and the second secret key associated with the integrity-protecting information.

A second aspect of the disclosure provides a communication method carried out by an authenticator node, the communication method comprising obtaining a multicast frame comprising a payload and an aggregated tag, the multicast frame being transmitted toward the authenticator node and a plurality of receivers, over a bus-based transmission medium; computing a source authentication tag based on a first secret key, the payload, and a first message authentication code (MAC) scheme; and modifying the multicast frame during the multicast transmission based on an aggregation of the multicast frame and the computed source authentication tag.

The communication method of the second aspect may be carried out by an authenticator node operating within a bus-based network, such as a Controller Area Network (CAN) bus. This authenticator node may be configured to perform operations ensuring message authenticity during multicast transmissions.

The method comprises obtaining the multicast frame. For example, the authenticator node may obtain the multicast frame that may be transmitted by the transmitter node. This multicast frame may comprise a payload, which is the data intended for multiple receivers, and an aggregated tag, which may be obtained by aggregating the source authentication tag and the integrity-protecting tag. The multicast frame may be received over a bus-based transmission medium, ensuring that both the authenticator node and multiple receivers have access to the message.

The method further comprises computing the source authentication tag. For example, the authenticator node may compute the source authentication tag using a first secret key, the payload, and a first Message Authentication Code (MAC) scheme. This computation may ensure that only data from verified sources will be processed and transmitted across the network.

The method further comprises modifying the multicast frame during the multicast transmission. For example, after the source authentication tag is computed, the authenticator node may modify the multicast frame in real-time. This modification may be based on an aggregation function such as an Exclusive OR (XOR) operation, which may combine the multicast frame with the computed source authentication tag. Through this operation, the authenticator node may alter the aggregated tag within the frame, leaving only the integrity-protecting tag accessible to receiver nodes. The modifying the multicast frame may enable receivers to verify data integrity, for example, without additional processing or knowledge of the source authentication tag.

This method of the second aspect may provide an advantage of dynamically modifying the multicast frame to ensure authenticity and integrity as it is transmitted through the system.

In an implementation form of the second aspect, the modified multicast frame comprises an integrity-protecting tag obtained based on the aggregation of the multicast frame and the computed source authentication tag, and wherein the aggregation of the multicast frame and the computed source authentication tag is performed by an aggregation function.

In a further implementation form of the second aspect, the aggregation function comprises an Exclusive or (XOR) operation, and wherein the multicast frame and the computed source authentication tag are aggregated with the XOR operation.

In a further implementation form of the second aspect, wherein before computing a source authentication tag based on a first secret key and a first MAC scheme, the method further comprises; obtaining the first secret key associated with source authentication information.

A third aspect of the disclosure provides a communication method carried out by a receiver node, the communication method comprising receiving a modified multicast frame comprising a payload and a first integrity-protecting tag; and verifying an integrity of the payload of the modified multicast frame based on the payload, a second secret key, and the tag.

The communication method of the third aspect may enable securely receiving and verifying multicast messages in a bus-based communication network. The method may be carried out by a receiver node, which may independently verify the integrity of data that it receives from a transmitter node, and may further ensure that only authorized and unaltered messages are processed. The method of the third aspect may be particularly beneficial in environments like CAN networks, where data integrity is crucial for reliable operation and security.

The method comprises receiving a modified multicast frame. For example, the receiver node may receive a modified multicast frame from the communication bus. The modified multicast frame may comprise a payload, which may comprise the data transmitted by the source, and an integrity-protecting tag. The integrity-protecting tag may have been retained in the frame by an authenticator node that modified the multicast frame. The method of third aspect may allow the receiver to confirm data integrity without needing access to the source authentication tag.

The method further comprises verifying an integrity of the payload of the modified multicast frame. For example, upon receiving the multicast frame, the receiver node may verify the integrity of the payload using the payload data, a second secret key, and the integrity-protecting tag. This step ensures that the data has not been tampered with during transmission. The integrity-protecting tag, derived from a secret key shared between the transmitter and receiver nodes, allows each receiver to authenticate the integrity of the payload independently, providing confidence that the received message is authentic and unaltered.

This method of the third aspect may enable the receiver node to perform integrity verification without requiring additional processing or storage, making it highly efficient for constrained communication environments.

Advantageously, the method of the third aspect, may facilitate a secure and efficient data verification at the receiver node. These advantages are especially relevant for bus-based networks like CAN, where communication efficiency and data integrity are essential.

For example, each receiver node may independently verify the integrity of the multicast frame based on the payload, shared secret key, and integrity-protecting tag. This may eliminate the need for exchanging additional messages, and may further reduce the dependency on central nodes.

Moreover, the method of the third aspect may use a single integrity-protecting tag derived from a MAC scheme, which may minimize the processing overhead at the receiver node.

Moreover, in some embodiments, the communication method may enable the receiver node to perform effective, real-time integrity verification without imposing significant overhead. This may further enhance data integrity and network resilience, in particular, for secure, reliable communication in resource-constrained, bus-based networks.

A fourth aspect of the disclosure provides a communication method carried out by a communication system, the communication method comprising obtaining, by a transmitter node, a frame comprising a payload, to be transmitted according to a multicast communication; computing, by the transmitter node, a first source authentication tag based on a first secret key, the payload, and a first message authentication code (MAC) scheme, and an integrity-protecting tag based on a second secret key, the payload, and a second MAC scheme; computing, by the transmitter node, an aggregated tag based on an aggregation of the source authentication tag and the integrity-protecting tag; determining, by the transmitter node, a multicast frame based on the frame and the aggregated tag; obtaining, by an authenticator node, the multicast frame comprising the payload and the aggregated tag, the multicast frame being transmitted toward the authenticator node and a plurality of receivers, over a bus-based transmission medium; computing, by the authenticator node, a second source authentication tag based on the first secret key, the payload, and the first MAC scheme; modifying, by the authenticator node, the multicast frame during the multicast transmission based on an aggregation of the multicast frame and the second source authentication tag; receiving, by a receiver node, the modified multicast frame comprising a payload and the integrity-protecting tag; and verifying, by the receiver node, the integrity of the payload of the modified multicast frame based on the payload, the second secret key, and the tag.

Advantageously, the method of the fourth aspect may provide a system-wide solution for secure, real-time multicast communication. Moreover, the method of the fourth aspect may enhance security across a range of constrained, bus-based communication systems. Furthermore, the method of the fourth aspect may ensure resilient, scalable, and efficient security, making it highly applicable in automotive, industrial, and other networked environments that demand reliable data integrity and source authentication.

A fifth aspect of the disclosure provides a transmitter node, comprising a processing unit and a transceiver unit, wherein the transceiver unit is configured to obtain a frame to be transmitted according to a multicast communication, wherein the frame comprises a payload; and wherein the processing unit is configured to compute a source authentication tag based on a first secret key, the payload, and a first message authentication code, MAC, scheme, and an integrity-protecting tag based on a second secret key, the payload, and a second MAC scheme; compute an aggregated tag based on an aggregation of the source authentication tag and the integrity-protecting tag; and determine a multicast frame based on the frame and the aggregated tag.

A sixth aspect of the disclosure provides an authenticator node configured to obtain a multicast frame comprising a payload and an aggregated tag, the multicast frame being transmitted toward the authenticator node and a plurality of receivers, over a bus-based transmission medium; compute a source authentication tag based on a first secret key, the payload, and a first message authentication code (MAC) scheme; and modify the multicast frame during the multicast transmission based on an aggregation of the multicast frame and the computed source authentication tag.

A seventh aspect of the disclosure provides a receiver node, comprising a processing unit and a transceiver unit, wherein the transceiver unit is configured to receive a modified multicast frame comprising a payload and a first integrity-protecting tag; and wherein the processing unit is configured to verify an integrity of the payload of the modified multicast frame based on the payload, a second secret key, and the tag.

An eighth aspect of the disclosure provides a computer program comprising a program code for performing the method according to the third aspect or the fourth aspect or any of their implementation forms.

A ninth aspect of the disclosure provides a non-transitory storage medium storing executable program code which, when executed by a processor, causes the method according to the third aspect or the fourth aspect or any of their implementation forms to be performed.

It has to be noted that all devices, elements, units and means described in the disclosure could be implemented in the software or hardware elements or any kind of combination thereof. All steps which are performed by the various entities described in the disclosure as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

In order to best describe the manner in which the above-described embodiments are implemented, as well as define other advantages and features of the disclosure, a more particular description is provided below and is illustrated in the appended drawings. Understanding that these drawings depict only exemplary embodiments of the invention and are not therefore to be considered to be limiting in scope, the examples will be described and explained with additional specificity and detail through the use of the accompanying drawings in which:
FIG. 1 illustrates an example flow diagram of a communication method carried out by a transmitter node, according to an embodiment of the invention;
FIG. 2 illustrates an example flow diagram of a communication method carried out by a transmitter node, according to an embodiment of the invention;
FIG. 3 illustrates an example flow diagram of a communication method carried out by a transmitter node, according to an embodiment of the invention;
FIG. 4 illustrates an example flow diagram of a communication method carried out by a transmitter node, according to an embodiment of the invention;
FIG. 5 illustrates a schematic of a communication system for performing a multicast transmission, according to an embodiment of the invention; and
FIG. 6 illustrates a schematic diagram of a configuration of a node in the communication system, according to and embodiment of the invention.

### DETAILED DESCRIPTION OF EMBODIMENTS

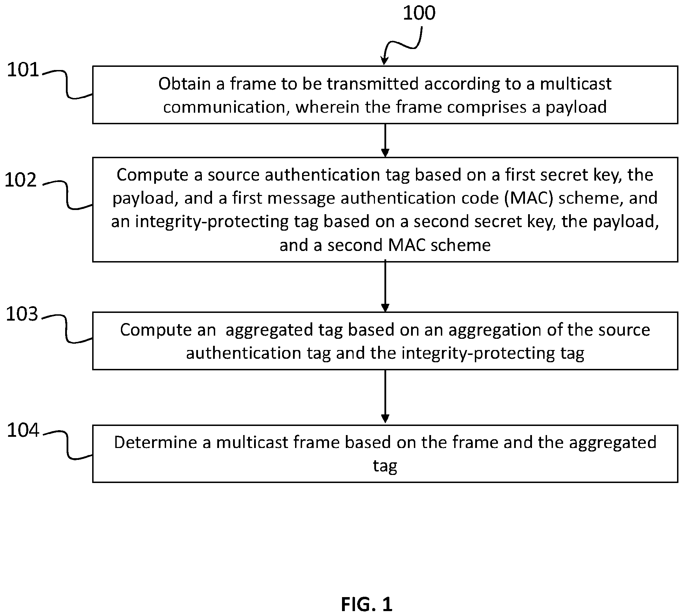

FIG. 1 illustrates an example flow diagram of a communication method 100 carried out by a transmitter node, according to an embodiment of the invention.

At step 101, the method 100 obtains, by a transmitter node, a frame to be transmitted according to a multicast communication, wherein the frame comprises a payload.

For example, the transmitter node may obtain a data frame that is intended for multicast transmission to multiple receiver nodes. The frame may comprise a payload, which is the actual data content to be sent.

At step 102, the method 100 computes a source authentication tag based on a first secret key, the payload, and a first MAC scheme, and an integrity-protecting tag based on a second secret key, the payload, and a second MAC scheme.

For example, the transmitter node may generate two cryptographic tags comprising a source authentication tag, using a first secret key and MAC scheme, and an integrity-protecting tag, using a second secret key and MAC scheme. These tags may be used for verifying the source and integrity of the multicast frame.

At step 103, the method 100 computes an aggregated tag based on an aggregation of the source authentication tag and the integrity-protecting tag.

For example, the transmitter node may aggregate the source authentication tag and the integrity-protecting tag into a single aggregated tag. An aggregation function, such as an XOR operation, may be used to obtain the aggregated tag, saving data size within the frame.

At step 104, the method 100 determines a multicast frame based on the frame and the aggregated tag.

For example, the transmitter node may incorporate the aggregated tag into the frame, forming a multicast frame that includes both the payload and the aggregated tag. This multicast frame may further be used for transmission to the intended recipients.

This method 100 may provide a secure and efficient means of transmitting multicast communication, with robust source authentication and data integrity verification. For example, the method 100 may aggregate both source authentication (t^{s}) and integrity-protecting tag into a single aggregated tag, the method 100 conserves bandwidth and maintains compatibility with resource-constrained environments like CAN bus networks. The method 100 may further enable real-time, low-latency data verification for multicast communication.

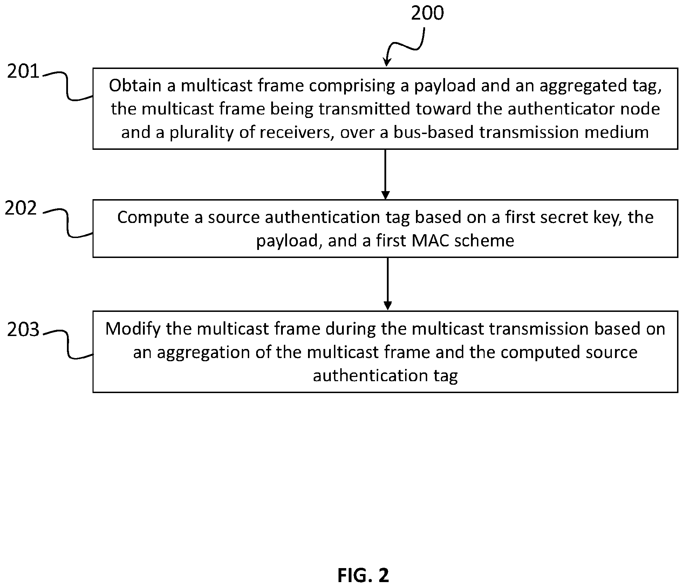

FIG. 2 illustrates an example flow diagram of a communication method 200 carried out by a transmitter node, according to an embodiment of the invention.

At step 201, the method 200 obtains a multicast frame comprising a payload and an aggregated tag, the multicast frame being transmitted toward the authenticator node and a plurality of receivers, over a bus-based transmission medium.

For example, the authenticator node may intercept a multicast frame during its transmission. The multicast frame may include both a payload and an aggregated tag (t), and may be transmitted over a bus-based network to reach multiple receiver nodes.

At step 202, the method 200 computes (202) a source authentication tag based on a first secret key, the payload, and a first message authentication code, MAC, scheme.

Specifically, the authenticator node may independently compute a source authentication tag using the payload and a first secret key, along with a specific MAC scheme. This computation enables the authenticator to verify the legitimacy of the multicast frame's source.

At step 203, the method 200 modifies the multicast frame during the multicast transmission based on an aggregation of the multicast frame and the computed source authentication tag.

For example, the authenticator node may modify the multicast frame in real-time by aggregating it with the computed source authentication tag. In some embodiments, an XOR operation may be used that may update the aggregated tag, leaving only the integrity-protecting tag to be accessible to the receiver nodes, without limiting the present invention to a specific modification process.

This method 200 may provide a secure, in-line verification process that may allow the authenticator node to confirm the source of multicast messages in real-time, without adding latency or overhead to the transmission.

Moreover, the method 200 may enable modifying the multicast frame during the transmission. In this way, the authenticator node may modify the multicast frame during the transmission. Moreover, the receiver nodes may verify the integrity of the payload of the modified multicast frame. This may further enhance the network security against impersonation attacks. The method 200 may be used for resource-constrained networks like CAN, where real-time performance and bandwidth conservation are essential.

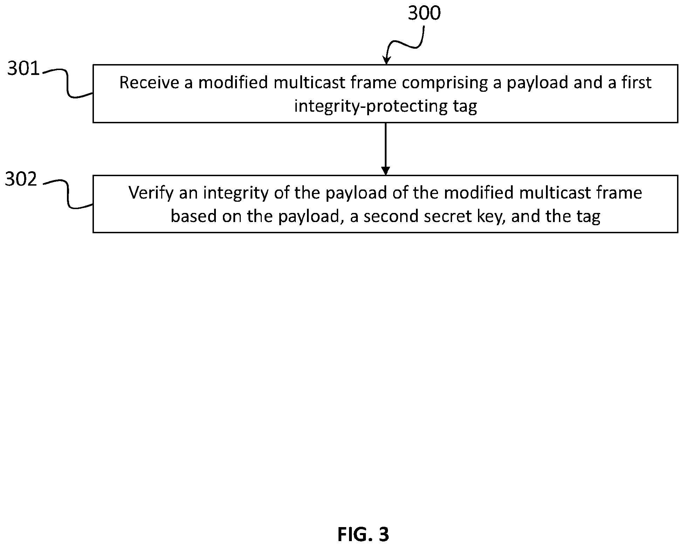

FIG. 3 illustrates an example flow diagram of a communication method 300 carried out by a transmitter node, according to an embodiment of the invention.

At step 301, the method 300 receives a modified multicast frame comprising a payload and a first integrity-protecting tag.

At this step, the receiver node may obtain a multicast frame that has been modified by an authenticator node during the multicast transmission. The received multicast frame may comprise the data payload and an integrity-protecting tag.

At step 302, the method 300 verifies an integrity of the payload of the modified multicast frame based on the payload, a second secret key, and the tag.

For example, the receiver node may use the integrity-protecting tag, along with the payload and a second secret key, to verify that the payload has not been altered, modified, etc. This verification ensures that the data integrity is maintained from the transmitter node to the receiver node.

This method 300 may enable the receiver node to independently verify the integrity of multicast messages without needing, for example, direct access to the source authentication information, a central entity, exchanging additional messages, or the like. For example, by using the integrity-protecting tag and a shared secret key, the receiver node may ensure the data integrity and the source authenticity, protecting against unauthorized modifications. The method 300 may provide the advantage of supporting real-time verification and allowing each receiver node to confirm data integrity with minimal processing, making it well-suited for bus-based networks like CAN.

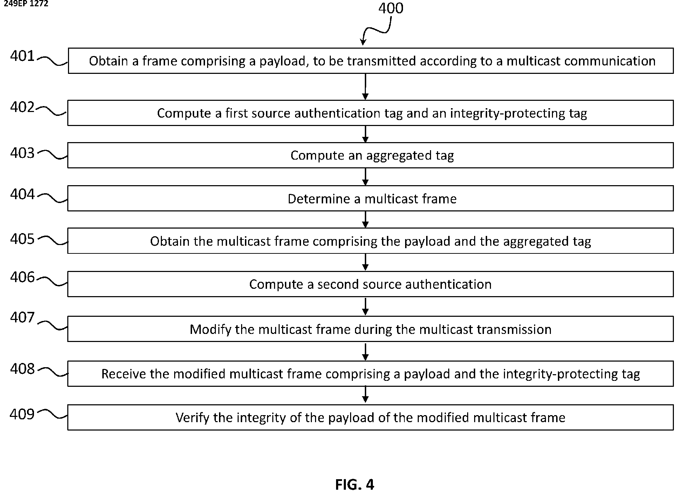

FIG. 4 illustrates an example flow diagram of a communication method 400 carried out by a transmitter node, according to an embodiment of the invention.

At step 401, the method 400 obtains, by a transmitter node, a frame comprising a payload, to be transmitted according to a multicast communication.

For example, the transmitter node may obtain a data frame that comprises the payload, intended for multicast transmission to multiple receiver nodes.

At step 402, the method 400 computes, by the transmitter node, a first source authentication tag based on a first secret key, the payload, and a first MAC scheme, and an integrity-protecting tag based on a second secret key, the payload, and a second MAC scheme.

For example, the transmitter may compute two tags comprising a source authentication tag and an integrity-protecting tag. Each tag may be computed based on the payload and a separate secret key using different MAC schemes to secure both the source authenticity and the data integrity.

At step 403, the method 400 computes, by the transmitter node, an aggregated tag based on an aggregation of the source authentication tag and the integrity-protecting tag.

For example, the transmitter may combine the source authentication and integrity-protecting tags into a single aggregated tag using an aggregation function, such as XOR.

At step 404, the method 400 determines, by the transmitter node, a multicast frame based on the frame and the aggregated tag.

For example, the transmitter node may incorporate the aggregated tag into the frame, creating a multicast frame ready for transmission that includes both the payload and the aggregated tag.

At step 405, the method 400 obtains, by an authenticator node, the multicast frame comprising the payload and the aggregated tag, the multicast frame being transmitted toward the authenticator node and a plurality of receivers, over a bus-based transmission medium.

For example, the authenticator node may intercept the multicast frame as it is transmitted over the bus. The multicast frame, comprising both the payload and the aggregated tag, is intended for multiple receiver nodes.

At step 406, the method 400 computes, by the authenticator node, a second source authentication tag based on the first secret key, the payload, and the first MAC scheme.

For example, the authenticator node may compute a second source authentication tag using the payload and the first secret key, allowing it to validate the authenticity of the multicast frame's source.

At step 407, the method 400 modifies, by the authenticator node, the multicast frame during the multicast transmission based on an aggregation of the multicast frame and the second source authentication tag.

For example, the authenticator may modify the frame in real-time by combining it with the computed source authentication tag, e.g., using an XOR operation.

At step 408, the method 400 receives, by a receiver node, the modified multicast frame comprising a payload and the integrity-protecting tag.

For example, the receiver node may receive the modified multicast frame, which may comprise the payload and the integrity-protecting tag, for further verification.

At step 409, the method 400 verifies, by the receiver node, the integrity of the payload of the modified multicast frame based on the payload, the second secret key, and the tag.

For example, the receiver node may verify the integrity of the payload using the integrity-protecting tag and a second secret key, confirming that the data has not been tampered with during transmission.

The method 400 may enable an end-to-end security in a multicast network, with each component such as the transmitter node, the authenticator node, and the receiver node may play a specific role to ensure both data integrity and source authentication.

The method 400 may further provide robust protection against unauthorized access and data tampering while maintaining real-time performance and conserving bandwidth. The method 400 may be particularly suited for bus-based networks like CAN, where it achieves secure multicast transmission without requiring additional infrastructure or modifying existing devices.

The communication method 400 of FIG. 4 may be performed by a communication comprising the transmitter node (also referred to as the sender), the authenticator node, and the receiver nodes.

The transmitter (sender) node may compute two authentication tags including a source authentication tag and an integrity-protecting tag. These tags are aggregated using an XOR operation to create a single aggregated tag, which is then integrated into the message before transmission.

The authenticator node may intercept the message on the bus prior to its receipt by the receiver nodes, may re-compute the source authentication tag, and perform an XOR operation with the aggregated tag in the message. This modification removes the source authentication tag, leaving only the integrity-protecting tag intact.

Upon receiving the message, each receiver node may verify the integrity-protecting tag, confirming both the data integrity and the authenticity of the sender. This process enables secure, low-overhead authentication and integrity verification for all receivers without additional message exchange.

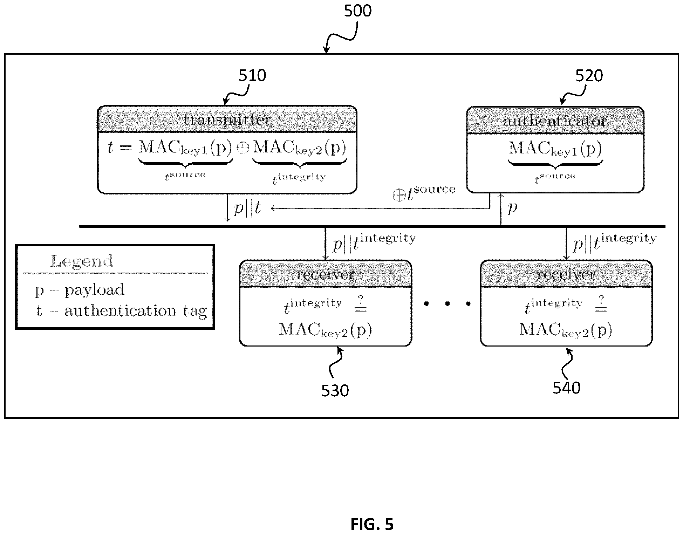

FIG. 5 illustrates a schematic of a communication system for performing a multicast transmission, according to an embodiment of the invention.

The communication system 500 of FIG. 5 comprises a transmitter node 510, an authenticator node 520, and multiple receiver nodes 530, and 540. The communication System 500 carries out a secure multicast communication method by separating source authentication from integrity verification, which in conventional systems is often combined into a single verification step.

At the transmitter node 510, a payload (p) is obtained to be transmitted according to multicast communication. The transmitter node 510 computes a source authentication tag (t^{source}) using a first secret key (key1), known only to the transmitter and the authenticator node, the payload, and a first message authentication code (MAC) scheme. Additionally, the transmitter node 510 computes an integrity-protecting tag (t^{integrity}) using a second secret key (key2) shared between the transmitter and all intended receiver nodes 530, and 540, the payload, and a second MAC scheme. These two tags (t^{source}, t^{integrity}), the source authentication tag (t^{source} ) and the integrity-protecting tag (t^{integrity}), are aggregated by the transmitter node through an aggregation function, specifically an Exclusive OR (XOR) operation, to produce a single aggregated tag (t). The transmitter node 510 then determines a multicast frame (m ∥t), based on the frame and the aggregated tag, preparing it for transmission.

The multicast frame (m ∥t), comprising the payload and the aggregated tag (t), is transmitted from the transmitter node 510 toward the authenticator node 520 and the plurality of receiver nodes 530, 540 over a bus-based transmission medium. As the multicast frame reaches the authenticator node 520, the authenticator node 520 processes the payload and computes a new source authentication tag based on the first secret key, the payload, and the first MAC scheme, independent of the transmitter node 510. Using the XOR operation, the authenticator node modifies the multicast frame in real-time by combining it with the newly computed source authentication tag, effectively removing the source authentication component and leaving only the integrity-protecting tag intact in the frame for verification by the receiver nodes 530, 540.

Upon receiving the modified multicast frame (p∥t^{integrity}), each receiver node 530, 540 obtains the payload and the integrity-protecting tag (t^{integrity}). Using the payload, the second secret key, and the integrity-protecting tag (t^{integrity}), each receiver node 530,540 verifies the integrity of the payload, confirming that the message has not been altered during transmission. Since exactly the integrity-protecting tag (t^{integrity}) remains accessible to the receiver nodes 530,540 after the authenticator's 520 modification of the multicast frame, the receiver nodes 530, and 540 can confirm both the integrity and the authenticity of the message without additional steps, based on the system's design.

This embodiment achieves efficient source authentication and integrity verification within a constrained network environment by employing a single aggregated tag for both purposes and modifying the frame in-line to remove the source authentication tag for the receiver nodes. This scheme may optimize bandwidth usage and processing efficiency, ensuring secure, real-time, multicast data transmission suitable for bus-based networks such as CAN.

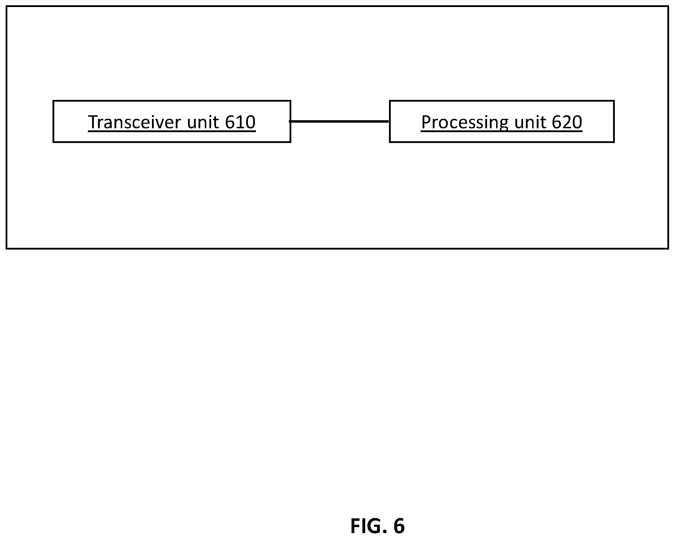

FIG. 6 illustrates a schematic diagram of a configuration of a node in the communication system, according to and embodiment of the invention.

The illustrated structure may be a configuration of the transmitter node and/or the authenticator node and/or the receiver node.

The transmitter node 510 may comprise a processing unit 620 and a transceiver unit 610. The processing unit 620 may compute cryptographic tags (source authentication and integrity-protecting tags) based on secret keys, payload data, and MAC schemes, and aggregate them into an aggregated tag for secure multicast transmission. The transceiver unit 610 may interface with the bus, transmitting the multicast frame with the payload and aggregated tag to the authenticator and receiver nodes.

The transceiver unit 610 may be configured to obtain a frame to be transmitted according to a multicast communication, wherein the frame comprises a payload.

The processing unit 620 may be configured to compute a source authentication tag based on a first secret key, the payload, and a first MAC scheme, and an integrity-protecting tag based on a second secret key, the payload, and a second MAC scheme; compute an aggregated tag based on an aggregation of the source authentication tag and the integrity-protecting tag; and determine a multicast frame based on the frame and the aggregated tag.

The authenticator node 520 may comprise the transceiver unit 610 and the processing unit 620. The processing unit 620 may securely store the first secret key, perform MAC operations, and compute the source authentication tag for incoming multicast frames, while also modifying frames to ensure only verified data reaches the receiver nodes. The transceiver unit 610 may communicate with the communication system, modify multicast frames in real-time, or the like.

The authenticator node may be configured to obtain a multicast frame comprising a payload and an aggregated tag, the multicast frame being transmitted toward the authenticator node and a plurality of receivers, over a bus-based transmission medium; compute a source authentication tag based on a first secret key, the payload, and a first MAC scheme; and modify the multicast frame during the multicast transmission based on an aggregation of the multicast frame and the computed source authentication tag.

In some embodiments, the transceiver unit 610 and/or the processing unit 620 of the authenticator node may be configured to perform an identical operation.

For example, in some embodiments, the transceiver unit 610 of the authenticator node may be configured to modify the multicast frame during the multicast transmission based on an aggregation of the multicast frame and the computed source authentication tag. In some embodiments, the processing unit 620 of the authenticator node may be configured to modify the multicast frame during the multicast transmission based on an aggregation of the multicast frame and the computed source authentication tag.

The receiver node 530, and 540 may comprise the transceiver unit 610 and the processing unit 620. The receiver node may be configured to receive, process, and verify multicast frames within a secure bus-based communication system.

The transceiver unit 610 may interface with the bus to receive multicast frames in real-time. The processing unit 620 may use a shared secret key to verify the payload against the integrity-protecting tag, detecting any unauthorized modifications.

The transceiver unit 610 may be configured to receive a modified multicast frame comprising a payload and a first integrity-protecting tag.

The processing unit 620 may be configured to verify an integrity of the payload of the modified multicast frame based on the payload, a second secret key, and the tag.

The various embodiments described above are provided by way of illustration only and should not be construed to limit the invention. For example, those skilled in the art will readily recognize various modifications and changes that may be made to the present invention without following the example embodiments and applications illustrated and described herein, and without departing from the scope of the present disclosure.

## Claims

1. A communication method (100) carried out by a transmitter node, the communication method comprising:
obtaining (101) a frame to be transmitted according to a multicast communication, wherein the frame comprises a payload;
computing (102) a source authentication tag based on a first secret key, the payload, and a first message authentication code, MAC, scheme, and an integrity-protecting tag based on a second secret key, the payload, and a second MAC scheme;
computing (103) an aggregated tag based on an aggregation of the source authentication tag and the integrity-protecting tag; and
determining (104) a multicast frame based on the frame and the aggregated tag.

2. The communication method (100) of claim 1, wherein the aggregation of the source authentication tag and the integrity-protecting tag is performed by an aggregation function.

3. The communication method (100) of claim 2, wherein the aggregation function comprises an Exclusive or, XOR, operation, and wherein the aggregated tag is computed by aggregating the source authentication tag and the integrity-protecting tag with the XOR operation.

4. The communication method (100) according to any of claims 1 to 3, wherein the determining (104) a multicast frame based on the frame and the aggregated tag comprises aggregating the aggregated tag and the payload of the frame.

5. The communication method (100) according to any of claims 1 to 4, further comprising performing a multicast communication comprising transmitting the multicast frame toward an authenticator node and a plurality of receivers, over a bus-based transmission medium.

6. The communication method (100) according to any of claims 1 to 5, wherein before computing a source authentication tag based on a first secret key, the payload, and a first MAC scheme, and an integrity-protecting tag based on a second secret key, the payload, and a second MAC scheme, the method further comprises;
obtaining the first secret key associated with source authentication information, and the second secret key associated with the integrity-protecting information.

7. A communication method (200) carried out by an authenticator node, the communication method comprising:
obtaining (201) a multicast frame comprising a payload and an aggregated tag, the multicast frame being transmitted toward the authenticator node and a plurality of receivers, over a bus-based transmission medium;
computing (202) a source authentication tag based on a first secret key, the payload, and a first message authentication code, MAC, scheme; and
modifying (203) the multicast frame during the multicast transmission based on an aggregation of the multicast frame and the computed source authentication tag.

8. The communication method (200) of claim 7, wherein the modified multicast frame comprises an integrity-protecting tag obtained based on the aggregation of the multicast frame and the computed source authentication tag, and wherein the aggregation of the multicast frame and the computed source authentication tag is performed by an aggregation function.

9. The communication method (200) of claim 8, wherein the aggregation function comprises an Exclusive or, XOR, operation, and wherein the multicast frame and the computed source authentication tag are aggregated with the XOR operation.

10. The communication method (200) according to any of claims 7 to 9, wherein before computing a source authentication tag based on a first secret key and a first MAC scheme, the method further comprises;
obtaining the first secret key associated with source authentication information.

11. A communication method (300) carried out by a receiver node, the communication method comprising:
receiving (301) a modified multicast frame comprising a payload and a first integrity-protecting tag; and
verifying (302) an integrity of the payload of the modified multicast frame based on the payload, a second secret key, and the tag.

12. A communication method (400) carried out by a communication system, the communication method comprising:
obtaining (401), by a transmitter node, a frame comprising a payload, to be transmitted according to a multicast communication;
computing (402), by the transmitter node, a first source authentication tag based on a first secret key, the payload, and a first message authentication code, MAC, scheme, and an integrity-protecting tag based on a second secret key, the payload, and a second MAC scheme;
computing (403), by the transmitter node, an aggregated tag based on an aggregation of the source authentication tag and the integrity-protecting tag;
determining (404), by the transmitter node, a multicast frame based on the frame and the aggregated tag;
obtaining (405), by an authenticator node, the multicast frame comprising the payload and the aggregated tag, the multicast frame being transmitted toward the authenticator node and a plurality of receivers, over a bus-based transmission medium;
computing (406), by the authenticator node, a second source authentication tag based on the first secret key, the payload, and the first MAC scheme;
modifying (407), by the authenticator node, the multicast frame during the multicast transmission based on an aggregation of the multicast frame and the second source authentication tag;
receiving (408), by a receiver node, the modified multicast frame comprising a payload and the integrity-protecting tag; and
verifying (409), by the receiver node, the integrity of the payload of the modified multicast frame based on the payload, the second secret key, and the tag.

13. A transmitter node (510), comprising a processing unit and a transceiver unit, wherein:
the transceiver unit (610) is configured to obtain a frame to be transmitted according to a multicast communication, wherein the frame comprises a payload; and wherein
the processing unit (620) is configured to:
compute a source authentication tag based on a first secret key, the payload, and a first message authentication code, MAC, scheme, and an integrity-protecting tag based on a second secret key, the payload, and a second MAC scheme;
compute an aggregated tag based on an aggregation of the source authentication tag and the integrity-protecting tag; and
determine a multicast frame based on the frame and the aggregated tag.

14. An authenticator node (520) configured to:
obtain a multicast frame comprising a payload and an aggregated tag, the multicast frame being transmitted toward the authenticator node and a plurality of receivers, over a bus-based transmission medium;
compute a source authentication tag based on a first secret key, the payload, and a first message authentication code, MAC, scheme; and
modify the multicast frame during the multicast transmission based on an aggregation of the multicast frame and the computed source authentication tag.

15. A receiver node (530, 540), comprising a processing unit (620) and a transceiver unit (610), wherein:
the transceiver unit (610) is configured to receive a modified multicast frame comprising a payload and a first integrity-protecting tag; and
wherein the processing unit (620) is configured to:
verify an integrity of the payload of the modified multicast frame based on the payload, a second secret key, and the tag.
